(19) Europäisches Patentamt
European Patent Office
Office européen des brevets

(11) EP 2 284 205 B1

(12) # EUROPEAN PATENT SPECIFICATION

(45) Date of publication and mention of the grant of the patent:
**02.11.2016 Bulletin 2016/44**

(21) Application number: **09754388.8**

(22) Date of filing: **15.05.2009**

(51) Int Cl.:
***C08F 220/26*** *(2006.01)* ***C08F 290/06*** *(2006.01)*
***G02B 1/11*** *(2015.01)* ***G02F 1/1335*** *(2006.01)*

(86) International application number:
**PCT/JP2009/002137**

(87) International publication number:
**WO 2009/144879 (03.12.2009 Gazette 2009/49)**

(54) **METHOD FOR PRODUCING AN OPTICAL COMPONENT**

VERFAHREN ZUR HERSTELLUNG EINER OPTISCHEN KOMPONENTE

MÉTHODE DE PRODUCTION D'UN COMPOSANT OPTIQUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **30.05.2008 JP 2008142826**

(43) Date of publication of application:
**16.02.2011 Bulletin 2011/07**

(73) Proprietor: **SOKEN CHEMICAL & ENGINEERING CO., LTD.**
**Toshima-ku**
**Tokyo 171-8531 (JP)**

(72) Inventors:
- **NAKAMURA, Masaki**
  **Kyoto 600-8530 (JP)**
- **KITAMURA, Kyoji**
  **Kyoto 600-8530 (JP)**
- **TATSUNO, Yosuke**
  **Kyoto 600-8530 (JP)**

(74) Representative: **Osha Liang**
**2, rue de la Paix**
**75002 Paris (FR)**

(56) References cited:
**EP-A1- 0 049 934**
**WO-A1-2007/040159**
**JP-A- 11 183 710**
**JP-A- 2007 084 815**
**JP-A- 2008 032 763**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 284 205 B1

## Description

### Technical Field

The present invention relates to a resin composition for producing an optical component and a use of the resin composition. Specifically, the present invention relates to a resin composition for producing an optical component in which resin composition respective of a (meth)acrylic equivalent and a given content of a repeating unit are adjusted to given ranges, an optical component which is made of the resin composition, and an image display device.

### Background Art

The display industry has recently seen a more and more extensive indoor and outdoor use of a display for a television, a personal computer, a mobile phone, a digital camera, a car navigation system, a game machine, and the like. In particular, a demand for a display for a mobile device is significantly increasing. On the other hand, such a display causes a problem of a deterioration in visibility due to glare of sunlight and/or light on a screen. This creates great needs for development of an antireflection technology.

In order to tackle the problem, an antireflective coating (hereinafter referred to as an AR coat) is mainly used. The AR coat is a method in which a stack of films which are made of substances whose refractive indexes are different is formed on a surface of a display, so as to prevent glare by causing beams of light reflecting on each of the films to interfere with each other. However, the AR coat has a problem of causing such a stack of films to be colored due to its wavelength dependence while causing a reduction in reflectance.

Examples of a method for forming an AR coat mainly include (i) a method in which a dry process such as vapor deposition or spattering is used and (ii) a method in which a wet process such as a spray coat or a roll coat is used. A feature of the method (i) resides in that: the method (i) allows formation of a layer having a high refractive index due to use mainly of an inorganic material and can realize a low reflectance, whereas the method (i) is less productive since it is carried out by a batch process. In contrast, a feature of the method (ii) resides in that: the method (ii) makes it difficult to realize a higher refractive index due to use mainly of an organic material and causes a high reflectance, whereas the method (ii) is highly productive since it can respond to a roll-to-roll process.

As described earlier, an AR coat, which is used in various fields, seems to be an insufficient method from the viewpoint of realization of both higher visibility and excellent productivity in a display.

In order to cope with these problems, Patent Literature 1 suggests a technique for a fine uneven structure having a high antireflection function, and Patent Literature 2 suggests a hard coat agent which is highly resistant to wear and abrasion.

### Citation List

Patent Literature 1
Japanese Patent Application Publication, Tokukai, No. 2005-331607 A (Publication Date: December 2, 2005)
Patent Literature 2
Japanese Patent Application Publication, Tokukai, No. 2003-292828 A (Publication Date: October 15, 2003)

### Summary of Invention

### Technical Problem

However, a high-molecular compound which is described in Patent Literature 1 and has a polysiloxane structure has a problem that the high-molecular compound cannot retain a fine uneven structure against an external force since the high-molecular compound is highly flexible but less resistant to wear and abrasion due to its low resin strength and resin extensibility.

In contrast, a composition described in Patent Literature 2 cannot retain a fine uneven structure against an external force as in the case of the high-molecular compound described in Patent Literature 1 since the composition is resistant to wear and abrasion for a planar structure due to its high resin strength but the composition has low resin flexibility and extensibility for the fine uneven structure.

In view of the circumstances, a technique which is alternative to such techniques has been long-awaited.

The present invention has been made in view of the problems, and its object is to provide a resin composition for producing an optical component in which resin composition respective of a (meth)acrylic equivalent and a content

of a repeating unit represented by the general formula (1) are adjusted to given ranges, an optical component which is made of the resin composition, and an image display device.

Solution to Problem

Inventors of the present invention diligently examined a resin composition which allows a resin cured product to be resistant to wear, abrasion, and pressure. As a result, the inventors finally accomplished the present invention by finding that an adjustment of ratios of respective of a (meth)acryloyl group and a given repeating unit to a resin composition allows obtainment of a resin composition which allows preparation of a resin cured product which has hardness and flexibility in a balanced manner.

The invention is as defined in the appended claims. Namely, a resin composition of the present invention for producing an optical component contains:

at least one kind of compound whose molecule contains a repeating unit and at least one (meth)acryloyl group, the repeating unit being represented by the general formula (1):

[Chem. 1]

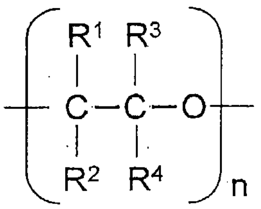 · · · (1)

wherein each of $R^1$ through $R^4$ independently represents a hydrogen atom or an alkyl group, and n represents an integer of not less than 1;
the resin composition meeting the following requirements (a) and (b),

(a) the resin composition has a (meth)acrylic equivalent of not less than 90 and not more than 500 and a content of the repeating unit of not less than 1% by weight and not more than 88% by weight,
(b) when n is an integer of not less than 2, a lower limit of the (meth)acrylic equivalent of and a lower limit of the content of the repeating unit of the resin composition are located on (I) a curve with a vertical axis representing the acrylic equivalent expressed by the following equation (2) and a horizontal axis representing the content of the repeating unit expressed by the following equation (3) or (II) a straight line which is defined by (i) a point obtained when the vertical axis and the horizontal axis respectively represent the acrylic equivalent of

pentaerythritol tetracrylate and the content of the repeating unit and (ii) a point obtained when each of $R^1$ through $R^4$ represents a hydrogen atom and n is equal to 2 in each of the equations (2) and (3),
the acrylic equivalent being expressed by the equation (2):

$$\text{acrylic equivalent} = [\{40 + Mw(R^1) + Mw(R^2) + Mw(R^3) + Mw(R^4)\} \times n + 126] / 2 \quad \ldots(2)$$

where Mw ($R^1$) through Mw ($R^4$) represent molecular weights of $R^1$ through $R^4$, respectively, and
the content of the repeating unit being expressed by the equation (3):

$$\text{content of repeating unit} = [\{40 + Mw(R^1) + Mw(R^2) + Mw(R^3) + Mw(R^4)\} \times n] \times 100 / [\{40 + Mw(R^1) + Mw(R^2) + Mw(R^3) + Mw(R^4)\} \times n + 126] \ldots (3)$$

where Mw ($R^1$) through Mw ($R^4$) represent molecular weights of $R^1$ through $R^4$, respectively.

Since the repeating unit is flexibly structured, it is possible to cause a resin cured product obtained by curing a resin composition to be flexible by causing a resin composition to contain the repeating unit.

The inventors of the present invention uniquely obtained knowledge that a content of the repeating unit and a (meth)acrylic equivalent may have an influence on flexibility and hardness of a resin cured product and it is possible to cause a resin cured product having a fine uneven structure to have hardness and flexibility in a balanced manner by suitably adjusting the content of the repeating unit and the (meth)acrylic equivalent. According to the arrangement, since respective of the content of the repeating unit and the (meth)acrylic equivalent are adjusted to suitable ranges in accordance with the knowledge, it is possible to provide a resin composition which allows a resin cured product having a fine uneven structure to have hardness and flexibility in a balanced manner. Therefore, it is possible to provide a resin composition which is extremely useful as a raw material for realizing a resin cured product which has a fine uneven structure and is also both highly resistant to wear, abrasion, and pressure and flexible.

Note that "(meth)acrylic equivalent", which is found by dividing a molecular weight of the compound contained in the resin composition by the number of (meth)acryloyl groups contained per molecule of the compound, has an influence on hardness and flexibility of the resin cured product.

The resin composition of the present invention can further contain a (meth)acrylate compound whose molecule contains no repeating unit.

It is possible to adjust the (meth)acrylic equivalent and the content of the repeating unit of the resin composition by causing the resin composition to contain the (meth)acrylate compound whose molecule contains no repeating unit. This allows (i) a resin composition which cannot meet the requirements (a) and (b) to be adjusted to meet the requirements (a) and (b) and (ii) respective of the (meth)acrylic equivalent and the content of the repeating unit to be adjusted to have more preferable ones. Accordingly, it is possible to increase the variety of resin compositions of the present invention for producing an optical component.

Note that it is possible to adjust resin properties such as a viscosity of a resin composition (a solution) and a glass transition temperature of a resin cured product in addition to the (meth)acrylic equivalent and the content of the repeating unit.

The resin composition of the present invention is preferably arranged such that the repeating unit is an ethylene oxide group or a propylene oxide group. Since an ethylene oxide group or a propylene oxide group is a general functional group as the repeating unit, it is possible to provide various resin compositions by adjusting the number of n by use of an ethylene oxide group or a propylene oxide group. Accordingly, it is possible to increase the variety of resin compositions of the present invention for producing an optical component.

The resin composition of the present invention is preferably arranged such that in the requirement (a) the resin composition has a (meth)acrylic equivalent of not less than 100 and not more than 250 and a content of the repeating unit of not less than 10% by weight and not more than 75% by weight.

According to the arrangement, respective of the content of the repeating unit and the (meth)acrylic equivalent are adjusted to more suitable ranges for causing a resin cured product having a fine uneven structure to have hardness and flexibility. Accordingly, it is possible to provide a resin composition which allows a resin cured product having a fine uneven structure to have hardness and flexibility in a more balanced manner.

The resin composition of the present invention is preferably arranged to further contain a photopolymerization initiator. According to the arrangement, it is possible to obtain a resin cured product by curing a resin composition by light irradiation without the need of separately adding a photopolymerization initiator to the resin composition. Accordingly, it is possible to effectively produce a resin cured product.

An optical component of the present invention which is obtained by curing a resin composition of the present invention for producing an optical component, has a fine uneven structure, intervals at which the fine uneven structure is provided are not more than half a wavelength of light which is to be prevented from reflecting.

According to the arrangement, since intervals at which the fine uneven structure is provided (a distance between adjacent protrusions of the uneven structure) are set to the specified range which is necessary for prevention of light reflection, it is possible to provide an optical component which has an excellent antireflection effect. Accordingly, it is possible to suitably use the optical component for an antireflection coating, an antireflection film, or the like.

The optical component of the present invention is preferably arranged such that the optical component is an antireflection coating or an antireflection film. As described earlier, a resin cured product obtained by curing a resin composition of the present invention for producing an optical component has hardness and flexibility in a balanced manner. Therefore, according to the arrangement, it is possible to provide an antireflection coating or an antireflection film which is highly resistant to wear, abrasion, and pressure and novel.

An image display device of the present invention includes an optical component of the present invention.

According to the optical component, the fine uneven structure is provided at intervals of not more than half a wavelength of light which is to be prevented from reflecting. Therefore, in a case where the optical component is used for a display, the optical component does not show a wavelength dependence (a property of specifically absorbing light in a specific waveband) differently from an AR coat but can effectively reflect light which is to be prevented from reflecting. Note that the optical component of the present invention is highly resistant to wear, abrasion, and pressure as described earlier. Accordingly, the image display device of the present invention can retain visibility for a long term since the image display device can (i) prevent a deterioration in visibility due to glare of sunlight and/or light on a screen and (ii) retain a fine uneven structure even when an external force is applied to the image display device.

Advantageous Effects of Invention

As described earlier, a resin composition of the present invention for producing an optical component is arranged to contain at least one kind of compound whose molecule contains the repeating unit represented by the general formula (1) and at least one (meth)acryloyl group and to meet the requirements (a) and (b). This brings about an effect of providing a resin composition which allows a resin cured product having a fine uneven structure to have hardness and flexibility in a balanced manner.

Brief Description of Drawings

Fig. 1
Fig. 1 is a graph illustrating ranges of respective of a (meth)acrylic equivalent and a content of the repeating unit, the ranges being specified in accordance with the requirements (a) and (b).

Description of Embodiments

An embodiment of the present invention is described below. Note, however, that the present invention is not limited to the embodiment.

(1. Resin Composition for Producing Optical Component)

A resin composition of the present invention for producing an optical component contains:

at least one kind of compound whose molecule contains a repeating unit and at least one (meth)acryloyl group, the repeating unit being represented by the general formula (1):

[Chem. 2]

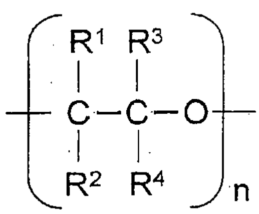

· · · (1)

wherein each of $R^1$ through $R^4$ independently represents a hydrogen atom or an alkyl group, and n represents an integer of not less than 1;
the resin composition meeting the following requirements (a) and (b),

(a) the resin composition has a (meth)acrylic equivalent of not less than 90 and not more than 500 and a content of the repeating unit of not less than 1% by weight and not more than 88% by weight,

(b) when n is an integer of not less than 2, a lower limit of the (meth)acrylic equivalent of and a lower limit of the content of the repeating unit of the resin composition are located on (I) a curve with a vertical axis representing the acrylic equivalent expressed by the following equation (2) and a horizontal axis representing the content of the repeating unit expressed by the following equation (3) or (II) a straight line which is defined by (i) a point obtained when the vertical axis and the horizontal axis respectively represent the acrylic equivalent of pentaerythritol tetracrylate and the content of the repeating unit and (ii) a point obtained when each of $R^1$ through $R^4$ represents a hydrogen atom and n is equal to 2 in each of the equations (2) and (3),

the acrylic equivalent being expressed by the equation (2):

$$\text{acrylic equivalent} = [\{40 + Mw(R^1) + Mw(R^2) + Mw(R^3) + Mw(R^4)\} \times n + 126] / 2 \quad \ldots(2)$$

where Mw ($R^1$) through Mw ($R^4$) represent molecular weights of $R^1$ through $R^4$, respectively, and
the content of the repeating unit being expressed by the equation (3):

$$\text{content of repeating unit} = [\{40 + Mw(R^1) + Mw(R^2) + Mw(R^3) + Mw(R^4)\} \times n] \times 100 / [\{40 + Mw(R^1) + Mw(R^2) + Mw(R^3) + Mw(R^4)\} \times n + 126] \quad \ldots(3)$$

where Mw ($R^1$) through Mw ($R^4$) represent molecular weights of $R^1$ through $R^4$, respectively.

Note that "a resin composition for producing an optical component" is herein also simply referred to as "a resin composition".

The repeating unit is used so as to allow a resin cured product, obtained by curing the resin composition of the present invention for producing an optical component, to be flexible. Each of $R^1$ through $R^4$ can independently represent a hydrogen atom or an alkyl group, and n can represent an integer of not less than 1. A chain length of the alkyl group is not particularly limited. The alkyl group can be linear or branched. Any combination of $R^1$ through $R^4$ is possible. $R^1$ through $R^4$ and n can be appropriately set within a range in which the resin composition meets the requirement (a). An ethylene oxide group or a propylene oxide group is preferably used as the repeating unit.

The resin composition contains at least one kind of compound whose molecule contains the repeating unit and at least one (meth)acryloyl group. A (meth)acryloyl group herein refers to an acryloyl group or a methacryloyl group. In a case where the compound contains two or more (meth)acryloyl groups, all of them can be acryloyl groups or methacryloyl groups. Alternatively, they can contain both an acryloyl group(s) and a methacryloyl group(s), and their ratios are not particularly limited, provided that the acryloyl group(s) and the methacryloyl group(s) are appropriately used within a range in which the resin composition meets the requirement (a).

A molecule of the compound contains at least one (meth)acryloyl group. The number of (meth)acryloyl groups, which is at least one, is not particularly limited, provided that the resin composition meets the requirement (a).

A (meth)acrylic equivalent is herein found by dividing a molecular weight of the compound contained in the resin composition by the number of (meth)acryloyl groups contained per molecule of the compound. Note here that the "compound" refers to a compound whose molecule contains the repeating unit represented by the general formula (1) and at least one (meth)acryloyl group. In a case where the resin composition is a mixture of two or more kinds of compounds, its (meth)acrylic equivalent is found by summating (meth)acrylic equivalents of the respective compounds in accordance with a ratio between the compounds. A (meth)acrylic equivalent can be found based on the following equation (4).

(meth)acrylic equivalent = molecular weight of the compound contained in resin composition / the number of (meth)acryloyl groups per molecule of the compound ... (4)

For example, in a case where the compound contained in a resin composition is diethylene glycol diacrylate, an acrylic equivalent of the resin composition is found to be 214 / 2 = 107, based on the equation (4).

In a case where a resin composition is a mixture of two or more kinds of compounds, its (meth)acrylic equivalent can be found based on the equation (5).

(meth)acrylic equivalent = ((meth)acrylic equivalent of compound a × ratio of compound a + (meth)acrylic equivalent of compound b × ratio of compound b + (meth)acrylic equivalent of compound c × ratio of compound c + ...) ... (5)

Note that, in the equation (5), the "ratio of compound a" refers to a ratio (% by weight) of a weight of the compound a whose molecule contains the repeating unit represented by the general formula (1) and at least one (meth)acryloyl group with respect to a weight of the resin composition (a sum of weights of compounds a, b, c, ...).

One kind or two or more kinds of compounds whose molecule contains the repeating unit and at least one (meth)acryloyl group can be contained in the resin composition. The number of kinds of the compounds contained in the resin composition is not particularly limited, provided that the resin composition meets the requirement (a).

Examples of the compound whose molecule contains the repeating unit represented by the general formula (1) and at least one (meth)acryloyl group include: phenoxyethyl (meth)acrylate, phenoxydiethylene glycol acrylate, nonylphenolethylene oxide adduct acrylate (n = 4), phenoxypolyethylene glycol acrylate (n = 6), p-cumylphenoxyethylene glycol (meth)acrylate, butoxydiethylene glycol (meth)acrylate, methoxytriethylene glycol (meth)acrylate, methoxypolyethylene glycol (meth)acrylate (n = 9), ethylene glycol dimethacrylate, diethylene glycol di(meth)acrylate, triethylene glycol di(meth)acrylate, tetraethylene glycol di(meth)acrylate, polyethylene glycol diacrylate (n = 6), polyethylene glycol di(meth)acrylate (n = 9), polyethylene glycol diacrylate (n = 13), polyethylene glycol di(meth)acrylate (n = 14), dipropylene glycol diacrylate, tripropylene glycol di(meth)acrylate, polypropylene glycol di(meth)acrylate (n = 7), polypropylene glycol diacrylate (n = 12), ethoxybisphenol-A dimethacrylate (n = 2), ethoxybisphenol-A diacrylate (n = 3), propoxybisphenol-A diacrylate (n = 3), propoxybisphenol-A diacrylate (n = 4), ethoxybisphenol-A di(meth)acrylate (n = 4), ethoxybisphenol-A dimethacrylate (n = 6), ethoxybisphenol-A dimethacrylate (n = 8), ethoxybisphenol-A di(meth)acrylate (n = 10), ethoxycyclohexane dimethanol diacrylate (n = 4), ethoxyneopentyl glycol diacrylate (n = 2), propoxyneopentyl glycol diacrylate (n = 2), alkoxyhexanediol diacrylate, ethoxyisocyanuric acid diacrylate, 1,3-adamantane dimethanol diacrylate, ethoxytrimethylol propane triacrylate (n = 1), ethoxytrimethylol propane triacrylate (n = 2), ethoxytrimethylol propane triacrylate (n = 3), ethoxytrimethylol propane triacrylate (n = 6), ethoxytrimethylol propane triacrylate (n = 9), ethoxytrimethylol propane triacrylate (n = 15), ethoxytrimethylol propane triacrylate (n = 20), ethoxyglycerin triacrylate (n = 3), ethoxyglycerin triacrylate (n = 6), ethoxyglycerin triacrylate (n = 9), ethoxyglycerin triacrylate (n = 11), ethoxyglycerin triacrylate (n = 18), ethoxyglycerin triacrylate (n = 20), propoxytrimethylol propane triacrylate (n = 1), propoxytrimethylol propane triacrylate (n = 2), propoxytrimethylol propane triacrylate (n = 3), propoxytrimethylol propane triacrylate (n = 6), ethoxyisocyanuric acid triacrylate (n = 3), ethoxyisocyanuric acid triacrylate (n = 6), ethoxypentaerythritol tetracrylate (n = 4), ethoxypentaerythritol tetracrylate (n = 35), and ethoxydipentaerythritol hexacrylate (n = 12)

Note that figures in parentheses written after the respective examples of the compound refer to the numbers of the repeating units which are contained in the compound and represented by the general formula (1). For example, "(n = 3)" means that the number of the repeating units which are contained in a compound and represented by the general formula (1) is 3.

It is necessary that the resin composition have a (meth)acrylic equivalent of not less than 90 and not more than 500, and preferably of not less than 100 and not more than 250. The (meth)acrylic equivalent of less than 90 causes the repeating unit to bring about an insufficient effect of enhancing flexibility and extensibility. This may cause the resin cured product not to retain its fine uneven structure against an external force. In contrast, the (meth)acrylic equivalent of more than 500 causes a dramatic deterioration in strength of the resin cured product. This may cause the resin cured product not to retain its fine uneven structure against an external force.

The resin composition has a content of the repeating unit represented by the general formula (1) of not less than 1% by weight and not more than 88% by weight. The "content of the repeating unit represented by the general formula (1)" refers to a ratio of a molecular weight of the repeating unit represented by the general formula (1) with respect to an average molecular weight of a compound which is contained in the resin composition and whose molecule contains the repeating unit and at least one (meth)acryloyl group (hereinafter simply referred to as "an average molecular weight of a resin composition)".

The molecular weight of the repeating unit is expressed by $\{40 + Mw(R^1) + Mw(R^2) + Mw(R^3) + Mw(R^4)\} \times n$. For example, in a case where a compound contained in a resin composition is diethylene glycol diacrylate, the molecular weight of the repeating unit is found to be $(40 + 1 + 1 + 1 + 1) \times 2 = 88$. This is because $Mw(R^1) = Mw(R^2) = Mw(R^3) = Mw(R^4) = 1$ and $n = 2$.

In a case where a resin composition is a mixture of two or more kinds of compounds, the content of the repeating unit represented by the general formula (1) is expressed by the following equation (6). Note that compounds to be mixed are indicated by a, b, c, ... in the equation (6).

content of repeating unit (%) = (molecular weight of repeating unit contained in compound a × ratio of compound a to resin composition + molecular weight of repeating unit contained in compound b × ratio of compound b to resin composition + molecular weight of repeating unit contained in compound c × ratio of compound c to resin composition + ...) × 100 / average molecular weight of resin composition ... (6)

For example, the "ratio of compound a to resin composition" in the equation (6) is found by dividing a weight of the compound a by a sum of weights of compounds a, b, c, ....

In a case where the resin composition is a mixture of a plurality of compounds (compounds a, b, c, ...), the "average molecular weight of resin composition" in the equation (6) is found by summating molecular weights of the plurality of compounds in accordance with ratios of the respective plurality of compounds to the sum of the weights of the plurality of compounds (the compounds a, b, c, ...). The "average molecular weight of resin composition" is expressed by the equation (7).

average molecular weight of resin composition = molecular weight of compound a × ratio of compound a to resin composition + molecular weight of compound b × ratio of compound b to resin composition + molecular weight of compound c × ratio of compound c to resin composition + ...) ... (7)

Note that "part(s) by weight" herein refers to an amount of an ingredient other than the chief ingredient which amount is obtained assuming that the chief ingredient is 100 and in which amount the ingredient is blended with the resin composition. "% by weight" refers to a ratio between ingredients which ratio is obtained assuming that the entire resin composition is 100.

The resin composition has a content of the repeating unit of not less than 1% by weight and not more than 88% by weight, and preferably of not less than 10% by weight and not more than 75% by weight. The content of less than 1% by weight causes the repeating unit to bring about an insufficient effect of enhancing flexibility and extensibility. This may cause the resin composition not to retain its fine uneven structure against an external force. In contrast, the content of more than 88% by weight causes a dramatic deterioration in strength of the resin cured product. This may cause the resin composition not to retain its fine uneven structure against an external force.

The requirement (b) is a requirement concerning lower limits of respective of the (meth)acrylic equivalent and the content of the repeating unit represented by the general formula (1) of the resin composition. As described earlier, the resin composition of the present invention for producing an optical component is required to meet the requirement (a). The (meth)acrylic equivalent and the content of the repeating unit have their respective lower limits specified in accordance with their relationship. The requirement (b) is described below with reference to Fig. 1. Fig. 1 is a graph illustrating ranges of respective of the (meth)acrylic equivalent and the content of the repeating unit, the ranges being specified in accordance with the requirements (a) and (b). A transverse axis and a vertical axis of the graph illustrated in Fig. 1 respectively represent the content of the repeating unit represented by the general formula (1) and the (meth)acrylic equivalent.

When a resin composition contains a compound 1 which contains the repeating unit represented by the general formula (1) and two acryloyl groups, the (meth)acrylic equivalent expressed by the equation (4) and the content of the repeating unit which content is expressed by the equation (6) have their respective lower limits. The compound 1 is represented by the general formula (8). For example, a molecular weight of diethylene glycol diacrylate, in which each of $R^1$ through $R^5$ is a hydrogen atom in the general formula (8), is found to be: $44 \times 2 + 126 = 214$. An acrylic equivalent of diethylene glycol diacrylate, which contains 2 acryloyl groups, is found to be 107, based on the equation (2), and a content of the repeating unit of diethylene glycol diacrylate is found to be: $44 \times 2 \times 100/214 = 41.2$% by weight, based on the equation (3).

Similarly, an acrylic equivalent and a content of the repeating unit of the compound 1 represented by the general formula (8) are found in a case where n = 3, 4, 5, .... Then, the acrylic equivalent and the content of the repeating unit which have been found are plotted to obtain a curve, in a case where n is an integer of not less than 2, with the vertical axis and the horizontal axis respectively representing the acrylic equivalent and the content of the repeating unit. The lower limits of respective of the (meth)acrylic equivalent and the content of the repeating unit are located on such a curve.

Namely, in a case where n is an integer of not less than 2, the lower limits are located on the curve with the vertical axis and the transverse axis respectively representing the acrylic equivalent expressed by the equation (2) and the content of the repeating unit which content is expressed by the equation (3). The curve is plotted in a solid line which starts from a position of a point specified by 41.2 on the transverse axis and 107 on the vertical axis (see Fig. 1). In this case, an acrylic equivalent and a content of the repeating unit of each compound 1 represented by the general formula (8) are plotted on the curve irrespective of kinds of $R^1$ through $R^4$.

[Chem. 3]

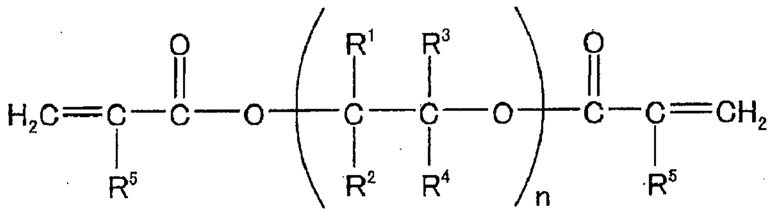

· · · (8)

(In the general formula (8), each of $R^1$ through $R^4$ independently represents a hydrogen atom or an alkyl group, n represents an integer of not less than 2, and $R^5$ is a hydrogen atom.)

$$\text{acrylic equivalent} = [\{40 + Mw(R^1) + Mw(R^2) + Mw(R^3) + Mw(R^4)\} \times n + 126] / 2 \quad ...(2)$$

$$\text{content of repeating unit} = [\{40 + Mw(R^1) + Mw(R^2) + Mw(R^3) + Mw(R^4)\} \times n] \times 100 / [\{40 + Mw(R^1) + Mw(R^2) + Mw(R^3) + Mw(R^4)\} \times n + 126] \quad ...(3)$$

(in the equations (2) and (3), Mw ($R^1$) through Mw ($R^4$) represent molecular weights of $R^1$ through $R^4$, respectively.)

Accordingly, in a case where n is an integer of not less than 2, a resin composition of the present invention for producing an optical component has a (meth)acrylic equivalent of not less than a corresponding value on the curve and not more than 500 and has a content of the repeating unit of not less than 41.2% by weight and not more than a corresponding value on the curve.

Diethylene glycol diacrylate, in which each of $R^1$ through $R^4$ is a hydrogen atom and n = 2, has a minimum acrylic equivalent and a minimum content of the repeating unit on the curve which are found based on the equations (2) and (3). As such, the content of the repeating unit which content is found based on the equations (2) and (3) cannot be more than 41.2% by weight. In view of the circumstances, pentaerythritol tetracrylate which is a compound which has the lowest acrylic equivalent of already-known compounds was mixed with diethylene glycol diacrylate. In the mixing, three mixing ratios were selected from mixing ratios which range from 100:0 to 0:100 in a weight ratio, and then an acrylic equivalent and a content of the repeating unit of the mixture were found based on the equations (5) and (6), respectively.

The acrylic equivalent and the content of the repeating unit were plotted so as to obtain a straight line defined by (i) plotted points which were found based on the equations (5) and (6), (ii) a point which was obtained with the vertical axis and the transverse axis respectively representing the acrylic equivalent of pentaerythritol tetracrylate and the content of the repeating unit, and (iii) a point which was obtained when n was equal to 2 in each of the equations (2) and (3). In Fig. 1, the straight line is a dotted line which connects (i) a point corresponding to the acrylic equivalent obtained when the content of the repeating unit is 0% by weight and (ii) the point specified by 41.2 on the transverse axis and 107 on the vertical axis.

Accordingly, the lower limits of respective of the (meth)acrylic equivalent and the content of the repeating unit are located on the straight line or the curve. A range in which the requirements (a) and (b) are met is defined by a rectangular region shown in a dashed line, the straight line, and the curve (see Fig. 1).

Note here that, for example, in case of a compound in which a (meth)acryloyl group is substituted for an acryloyl group of the compound 1 represented by the general formula (8), the (meth)acrylic equivalent and the content of the repeating unit never fall below the respective lower limits. Note also that the compound 1 represented by the general formula (8) contains 2 acryloyl groups. In a case where the compound contains not less than 3 acryloyl groups, the (meth)acrylic equivalent and the content of the repeating unit never fall below the respective lower limits.

The resin composition of the present invention for producing an optical component can contain, for example, another compound, provided (i) it contains at least one compound whose molecule contains the repeating unit and at least one (meth)acryloyl group and (ii) it meets the requirements (a) and (b). Such another compound is exemplified by

a (meth)acrylate compound whose molecule contains no repeating unit. When a (meth)acrylate compound whose molecule contains no repeating unit is mixed with the resin composition, the lower limits of respective of the (meth)acrylic equivalent and the content of the repeating unit are located on the straight line.

Such a mixture of the (meth)acrylate compound whose molecule contains no repeating unit and the resin composition allows an adjustment of the (meth)acrylic equivalent and the content of the repeating unit. This allows (i) a resin composition which cannot meet the requirements (a) and (b) to be adjusted to meet the requirements (a) and (b) and (ii) the (meth)acrylic equivalent and the content of the repeating unit to be adjusted to have respective more preferable ones.

A compound which contains one (1) (meth)acryloyl group can be used as the (meth)acrylate compound whose molecule contains no repeating unit. However, it is preferable that a blending amount of such a compound be not more than 80% by weight. If the blending amount is of more than 80% by weight, then a resin cured product obtained by hardening the resin composition may have a reduced crosslink density and therefore may have a weaker resin strength or may prevent obtainment of a resin cured product.

Examples of the (meth)acrylate compound whose molecule contains no repeating unit include: methyl methacrylate, ethyl methacrylate, n-butyl methacrylate, isobutyl methacrylate, tert-butyl methacrylate, 2-ethylhexyl methacrylate, isodecyl methacrylate, n-lauryl (meth)acrylate, alkyl acrylate (n = 12 to 15), n-stearyl (meth)acrylate, cyclohexyl methacrylate, tetrahydrofurfuryl methacrylate, benzyl methacrylate, isobornyl (meth)acrylate, 2-hydroxyethyl (meth)acrylate, 2-hydroxypropyl (meth)acrylate, 2-hydroxybutyl (meth)acrylate, dimethylaminoethyl methacrylate, diethylaminoethyl methacrylate, 2-methacryloyloxyethyl-2-hydroxypropylphthalate, glycidyl methacrylate, 2-hydroxy-3-acryloyloxypropyl (meth)acrylate, trifluoroethyl methacrylate, perfluorooctylethyl (meth)acrylate, isoamyl acrylate, isomyristyl acrylate, tetrahydrofurfuryl acrylate, 2-hydroxy-3-phenoxypropyl acrylate, isostearyl (meth)acrylate, o-phenylphenolglycidyl ether acrylate, 1,3-butandiol diacrylate, 1,4-butandiol di(meth)acrylate, neopentyl glycol di(meth)acrylate, 1,6-hexanediol di(meth)acrylate, 1,9-nonanediol di(meth)acrylate, 1,10-decanediol dimethacrylate, glycerin dimethacrylate, dimethyloltricyclodecane di(meth)acrylate, 3-methyl-1,5-pentadiol diacrylate, 2-butyl-2-ethyl-1,3-propanediol diacrylate, 2-methyl-1,8-octanediol diacrylate, cyclohexanedimethanol dimethacrylate, tririzethylolpropane tri(meth)acrylate, tris(2-hydroxyethyl) is ocyanurate triacrylate, pentaerythritol triacrylate, pentaerythritol tetracrylate, ditrimethylolpropane tetracrylate, dipentaerythritol pentacrylate, and dipentaerythritol hexacrylate.

In order to allow a cured product to be antifouling and to have release function from a stamper, it is possible to blend fluorine (meth)acrylate, a fluorine silane coupling agent, or the like with the resin composition of the present invention for producing an optical component, preferably in an amount of 0.1 part by weight to 30 parts by weight with respect to 100 parts by weight of the resin composition of the present invention for producing an optical component.

The fluorine (meth)acrylate is exemplified by trifluoroethyl acrylate and perfluorooctylethyl acrylate. The fluorine silane coupling agent is exemplified by trifluoropropyltrimethoxysilane and heptadecatrifluorodecyltrimethoxysilane.

In order to allow a resin composition and a base material to be more closely adhered to each other, it is possible to blend a primer, a silane coupling agent, or the like with the resin composition of the present invention for producing an optical component, preferably in an amount of 0.1 part by weight to 20 parts by weight with respect to 100 parts by weight of the resin composition of the present invention for producing an optical component. Note that a conventionally known base material such as a glass base material or a plastic base material can be used as the base material.

The primer or the silane coupling agent is exemplified by 3-methacryloxypropyltrimethoxysilane and 3-acryloxypropyltrimethoxysilane.

The resin composition of the present invention for producing an optical component can preliminarily contain a curing agent. A radioactive ray used to cure is exemplified by an electron beam and UV rays. In particular, UV rays are preferable. Accordingly, it is preferable that the resin composition of the present invention for producing an optical component contain a polymerization initiator, especially a photopolymerization initiator.

The photopolymerization initiator, which is not particularly limited, is exemplified by a benzoate, a benzophenone derivative, a benzoin derivative, a thioxanthone derivative, an acetophenone derivative, a propiophenone derivative, and benzyl.

Specific examples of the photopolymerization initiator include: methyl-orthobenzoylbenzoate, benzophenone, 4,4-bisdiethylaminobenzophenone, dibenzosuberone, benzoylalkyl ether (having a C1-C8 alkyl group which can be branched), 1-phenyl-1, 2-propariedione-2-(O-ethoxycarbonyl)oxime, 1-phenyl-1, 2-propanedione-2-(O-benzoyl)oxime, 2,2-dimethoxy-2-phenylacetophenone, 2,2-diethoxyacetophenone, a chlorinated acetophenone derivative, 4-isopropyl-2-hydroxy-2-methyl-propiophenone, 2-hydroxy-2-methylpropiophenone, 2-hydroxy-2-methyl-1-phenylpropan-1-one and benzyl, and 2,4,6-trimethylbenzoyldiphenylphosphineoxide.

Of these photopolymerization initiators, a radical polymerization initiator is particularly preferable. Examples of the radical polymerization initiator include: 2-hydroxy-2-methyl-1-phenylpropan-1-one, 2,2-dimethoxy-2-phenylacetophenone, and 2,4,6-trimethylbenzoyldiphenylphosphineoxide. Of these particularly preferable polymerization initiators, 2-hydroxy-2-methyl- 1-phenylpropan-1-one is commercially available as DAROCUR 1173 (produced by Ciba Japan K.K.) and 2,4,6-trimethylbenzoyldiphenylphosphineoxide as Lucirin TPO (Produced by BASF).

It is preferable that a blending amount of the photopolymerization initiator be 0.5 part by weight to 10 parts by weight with respect to 100 parts by weight of the resin composition of the present invention for producing an optical component.

The resin composition of the present invention for producing an optical component can be arranged to contain at least one kind of compound whose molecule contains the repeating unit represented by the general formula (1) and at least one (meth)acryloyl group and to meet the requirements (a) and (b). Accordingly, in a case where the resin composition contains a single kind of compound, the compound whose molecule contains the repeating unit represented by the general formula (1) and at least one (meth)acryloyl group can be used as it is. Note that the compound can be a commercially available product or a synthetic product.

In a case where the resin composition contains two or more kinds of compounds, it is possible to produce a resin composition of the present invention for producing an optical component by appropriately mixing the two or more kinds of compounds so that the resin composition meets the requirements (a) and (b). The mixture can be carried out by use of a conventionally known stirrer or the like.

The curing agent can be preliminarily mixed with the resin composition of the present invention for producing an optical component. Alternatively, the curing agent can be separately added to the resin composition of the present invention while a curing reaction is being carried out. Note that fluorine (meth)acrylate, a fluorine silane coupling agent, a primer, a silane coupling agent, or the like can be added to the resin composition of the present invention according to need.

A resin composition of the present invention for producing an optical component can be used as a material of which optical components such as an antireflection coating and an antireflection film are made. Since the resin composition of the present invention for producing an optical component meets the requirements (a) and (b), it is possible to provide an optical component which is highly resistant to wear, abrasion, and pressure and has both hardness and flexibility in a balanced manner, by merely causing the resin composition of the present invention to be cured and to have a fine uneven structure.

(2. Optical Component)

An optical component of the present invention, which is obtained by curing a resin composition of the present invention for producing an optical component, has a fine uneven structure, intervals at which the fine uneven structure is provided are not more than half a wavelength of light which is to be prevented from reflecting.

The fine uneven structure is an uneven structure, intervals at which the fine uneven structure is provided are not more than half a wavelength of light which is to be prevented from reflecting. In a case where the intervals are more than half the wavelength, the light may be insufficiently prevented from reflecting. The light which is to be prevented from reflecting is not particularly limited. The light is exemplified by visible light and near infrared light.

It is possible to design a fine uneven structure in accordance with a wavelength of light which is to be prevented from reflecting so that intervals at which the fine uneven structure is provided are is not more than half the wavelength of the light. A method for forming the fine uneven structure is not particularly limited. For example, it is possible to prepare a mold of a stamper, by carrying out a laser interference exposure method, an electron-beam exposure method, or the like with respect to a photopolymer, so that the intervals at which the fine uneven structure is provided are not more than half the wavelength of the light and then prepare the stamper by a publicly-known method in which the mold is, for example, electroformed by use of Ni or the like. It is possible to produce an optical component of the present invention by pressing the stamper against a resin composition of the present invention so as to transfer the fine uneven structure to the resin composition and then curing the resin composition. Note that "intervals at which an uneven structure is provided" refers to a distance between adjacent protrusions of the uneven structure.

It is also possible to form a fine uneven structure by causing a suitable solvent to elute only one ingredient by use of phase separation of two kinds of resins or the like.

For carrying out carrying out a transfer of a fine uneven structure by use of a stamper, a property of the resin composition for producing an optical component is not particularly limited and can be appropriately selected for any purpose. The resin composition is exemplified by an uncured resin, a partially-cured resin, and the like.

A temperature at which the transfer of the fine uneven structure is carried out by use of the stamper and a pressure under which the stamper is pressed against the resin composition of the present invention are not particularly limited and can be appropriately selected for any purpose. The temperature is preferably 50°C to 250°C, more preferably 50°C to 200°C, and most preferably 50°C to 150°C. The pressure is preferably 0.1Mpa to 15Mpa, more preferably 0.5Mpa to 10Mpa, and most preferably 1Mpa to 5Mpa.

Specific examples of a method in which the transfer is carried out include: (1) a method in which the stamper is pressed against a layer of a base material which layer is coated with an uncured resin composition or a partially-cured resin composition, the layer coated with the resin composition is cured while a transfer of a shape of the fine uneven structure is carried out by UV ray or electron beam irradiation from a backside of the base material, and then the stamper

is released from the resin layer and (2) a method in which a transfer of a shape of the fine uneven structure is carried out by pressing the stamper against a layer of an uncured resin composition or a partially-cured resin composition, the stamper is released from the layer, and then UV or electron beam irradiation is carried out with respect to the layer so that the layer is cured. For example, it is possible to cause ionizing radiation to cure the resin composition. In a case where the ionizing radiation is of electromagnetic wave type, ionizing radiation irradiation can be carried out by use of, for example, a high pressure mercury lamp.

An oxygen concentration at which a resin to be UV-cured is cured by UV irradiation is not particularly limited and can be appropriately selected for any purpose. The oxygen concentration is preferably not more than 0.5%, more preferably not more than 0.3%, and most preferably not more than 0.2%.

An amount of irradiation energy which causes the resin to be cured by UV irradiation is not particularly limited and can be appropriately selected for any purpose, provided that the amount is sufficient for a curing reaction to satisfactorily proceed. For example, the amount is preferably 300mJ/cm$^2$ to 10000mJ/cm$^2$, more preferably 600mJ/cm$^2$ to 8000mJ/cm$^2$, and most preferably 1000mJ/cm$^2$ to 6000mJ/cm$^2$.

It is also possible to cure the resin composition for producing an optical component by partially curing a resin by means such as electron beam or UV irradiation or heating before pressing the stamper so as to carry out a transfer of the shape of the stamper. In a case where the optical component is multilayered, it is preferable to stack layers one by one so that an upper layer is stacked on a lower layer after the lower layer is sufficiently cured.

A height of the fine uneven structure is not particularly limited, and a higher fine uneven structure has a more excellent antireflection effect. Therefore, an upper limit of the height is not particularly limited, provided that the fine uneven structure can be retained.

The optical component can be a monolayer whose top surface has the fine uneven structure or a double layer whose interlayer has the fine uneven structure. A cross-sectional shape of the fine uneven structure is not particularly limited and can be appropriately selected for any purpose. For example, in a case where the optical component is used for an antireflection coating, the cross-sectional shape is exemplified by a cone shape, a triangular pyramid shape, a bell shape, and a shape whose interface with air narrows and which is wavy in one direction. Of these shapes, a structure in which an average refractive index sequentially changes from an air interface (whose refractive index is approximately 1) to a base material is preferable, a structure in which the fine uneven structure has no directional property (e.g., the cone shape, the triangular pyramid shape, and the bell shape) is more preferable, a structure in which a refractive index sequentially changes linearly in a thickness direction (e.g., the cone shape and the triangular pyramid shape) is particularly preferable.

The optical component is not particularly limited and can be appropriately selected for any purpose. The optical component is exemplified by an antireflection coating, an antireflection film, a relief hologram, a lens, an optical waveguide, an optical disk, and a polarization split element. Of these optical components, the antireflection coating and the antireflection film are particularly preferable.

A surface hardness of the antireflection coating is, in conformity with JIS K 5600-5-4 (described later), preferably not less than HB, more preferably not less than H, and most preferably not less than 2H. The antireflection coating is arranged so that the fine uneven structure serves as an interface with air. The antireflection coating can be formed directly on a display surface, a lens surface, a polarizer surface, and the like of, for example, an image display device. It is preferable to form an antireflection plate or film by stacking antireflection coatings by adhesion or the like on a transparent plate or film base material such as plastic or glass and to provide the antireflection plate or film in an image display device, a polarizer, and the like of, for example, a display.

An antireflection film whose base material has a surface on which the fine uneven structure is formed is used. Specifically, an antireflection film whose base material has a surface on which the antireflection coatings are stacked is preferably used. In a case an antireflection film is formed by stacking the antireflection coatings on the film base material, it is preferable to adhere, to an image display surface of an image display device, a surface of the film base material on which surface the antireflection coatings are stacked.

The optical component is preferably usable for, for example, a liquid crystal display device (an LCD), a plasma display panel (PDP), an electroluminescence display (ELD), a cathode-ray tube display device (CRT), a case cover, an optical lens, an eyeglass lens, a windshield, a light cover, and a helmet shield.

The optical component, which is obtained by curing the resin composition of the present invention for producing an optical component, is highly resistant to wear, abrasion, and pressure and has hardness and flexibility in a balanced manner. Therefore, the optical component can retain a fine uneven structure even if an external force is applied to the optical component. This prevents the optical component from losing an antireflection effect brought about by the fine uneven structure. Accordingly, it is possible to preferably use the optical component for various purposes as described above.

(3. Image Display device)

An image display device of the present invention includes an optical component of the present invention. The image display device further includes members other than the optical component according to need.
The image display device, which is not particularly limited and can be appropriately selected for any purpose, is exemplified by a cathode-ray tube display device (CRT), a plasma display panel (PDP), an electroluminescence display (ELD), and a liquid crystal display device (an LCD). Of these image display devices, a liquid crystal display device is preferably used. Liquid crystal of the liquid crystal display device is not particularly limited. Examples of the liquid crystal include: STN-mode liquid crystal, TN-mode liquid crystal, GH-mode liquid crystal, ECB-mode liquid crystal, ferroelectric liquid crystal, antiferroelectric liquid crystal, VA-mode liquid crystal, ASM-mode liquid crystal, and other various kinds of liquid crystal.
The present invention is not limited to the description of the embodiments above, but may be altered by a skilled person within the scope of the claims. An embodiment based on a proper combination of technical means disclosed in different embodiments is encompassed in the technical scope of the present invention.

Examples

[Example 1]

A UV curable resin composition was prepared by blending 3 parts by weight of 2-hydroxy-2-methyl- 1-phenylpropan-1-one (product name: DAROCUR 1173, produced by Ciba Japan K.K.) with 100 parts by weight of tripropylene glycol diacrylate (product name: NK-Ester APG-200, produced by Shin-Nakamura Chemical Co., Ltd.). Next, the UV curable resin composition was applied to a stamper and then a glass substrate was pressed against the stamper. Subsequently, a resin of the resin composition was cured by UV irradiation (illuminance: 20mW/cm$^2$, irradiation time: 300 seconds), thereby transferring a shape of the stamper to the resin composition. Then, a thin film which had a thickness of 10$\mu$m and whose fine uneven structure had a height of 100nm and was provided at intervals of 300nm was formed on a surface of a resin cured product. Note that the tripropylene glycol diacrylate used in the present example is a compound in which n = 3 in the general formula (1).

[Example 2]

A UV curable resin composition was prepared by mixing 85% by weight of polyethylene glycol diacrylate (product name: NK-Ester A-1000, produced by Shin-Nakamura Chemical Co., Ltd.) and 15% by weight of pentaerythritol tetracrylate (product name: Light Acrylate PE-4A, produced by KYOEISYA CHEMICHAL Co., LTD.) and then blending, with the mixture, 3 parts by weight of 2-hydroxy-2-methyl- 1-phenylpropan-1-one (product name: DAROCUR 1173, produced by Ciba Japan K.K.) as a photopolymerization initiator.
Subsequently, a thin film which had a thickness of 10$\mu$m and whose fine uneven structure had a height of 100nm and was provided at intervals of 300nm was formed on a surface of a resin cured product by a method similar to that described in Example 1. Note that the polyethylene glycol diacrylate used in the present example is a compound in which n = 23 in the general formula (1).

[Example 3]

A UV curable resin composition was prepared by mixing 20% by weight of diethylene glycol diacrylate (product name: SR-230, produced by Sartomer Company, Inc.) and 80% by weight of dipentaerythritol hexacrylate (product name: Light Acrylate DPE-6A, produced by KYOEISYA CHEMICHAL Co., LTD.) and then blending, with the mixture, 3 parts by weight of 2-hydroxy-2-methyl-1-phenylpropan-1-one (product name: DAROCUR 1173, produced by Ciba Japan K.K.) as a photopolymerization initiator.
Subsequently, a thin film which had a thickness of 10$\mu$m and whose fine uneven structure had a height of 100nm and was provided at intervals of 300nm was formed on a surface of a resin cured product by a method similar to that described in Example 1. Note that the diethylene glycol diacrylate used in the present example is a compound in which n = 2 in the general formula (1).

[Example 4]

A UV curable resin composition was prepared by mixing 90% by weight of diethylene glycol diacrylate (product name: SR-230, produced by Sartomer Company, Inc.) and 10% by weight of pentaerythritol tetracrylate (product name: Light Acrylate PE-4A, produced by KYOEISYA CHEMICHAL Co., LTD.) and then blending, with the mixture, 3 parts by

weight of 2,4,6-trimethylbenzoyldiphenylphosphineoxide (Lucirin TPO, produced by BASF) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the diethylene glycol diacrylate used in the present example is a compound in which n = 2 in the general formula (1).

[Example 5]

A UV curable resin composition was prepared by mixing 50% by weight of polyethylene glycol diacrylate (product name: Light Acrylate 4EG-A, produced by KYOEISYA CHEMICHAL Co., LTD.) and 50% by weight of pentaerythritol tetracrylate (product name: Light Acrylate PE-4A, produced by KYOEISYA CHEMICHAL Co., LTD.) and then blending, with the mixture, 3 parts by weight of 2,4,6-trimethylbenzoyldiphenylphosphineoxide (Lucirin TPO, produced by BASF) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the polyethylene glycol diacrylate used in the present example is a compound in which n = 4 in the general formula (1).

[Example 6]

A UV curable resin composition was prepared by mixing 85% by weight of polyethylene glycol diacrylate (product name: Light Acrylate 9EG-A, produced by KYOEISYA CHEMICHAL Co., LTD.) and 15% by weight of pentaerythritol tetracrylate (product name: Light Acrylate PE-4A, produced by KYOEISYA CHEMICHAL Co., LTD.) and then blending, with the mixture, 3 parts by weight of 2,4,6-trimethylbenzoyldiphenylphosphineoxide (Lucirin TPO, produced by BASF) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the polyethylene glycol diacrylate used in the present example is a compound in which n = 9 in the general formula (1).

[Example 7]

A UV curable resin composition was prepared by mixing 35% by weight of triethylene glycol diacrylate (product name: Light Acrylate 3EG-A, produced by KYOEISYA CHEMICHAL Co., LTD.) and 65% by weight of dipentaerythritol hexacrylate (product name: Light Acrylate DPE-6A, produced by KYOEISYA CHEMICHAL Co., LTD.) and then blending, with the mixture, 3 parts by weight of 2,4,6-trimethylbenzoyldiphenylphosphineoxide (Lucirin TPO, produced by BASF) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the triethylene glycol diacrylate used in the present example is a compound in which n = 3 in the general formula (1).

[Example 8]

A UV curable resin composition was prepared by mixing 25% by weight of polyethylene glycol diacrylate (product name: Light Acrylate 4EG-A, produced by KYOEISYA CHEMICHAL Co., LTD.) and 75% by weight of 9,9-bis[4-(2-acryloyloxyethoxy)phenyl]fluorene (product name: NK-Ester A-BPEF, produced by Shin-Nakamura Chemical Co., Ltd.) and then blending, with the mixture, 3 parts by weight of 2,4,6-trimethylbenzoyldiphenylphosphineoxide (Lucirin TPO, produced by BASF) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the polyethylene glycol diacrylate used in the present example is a compound in which n = 4 in the general formula (1).

[Comparative Example 1]

A UV curable resin composition was prepared by blending 3 parts by weight of 2-hydroxy-2-methyl-1-phenylpropan-1-one (product name: DAROCUR 1173, produced by Ciba Japan K.K.) with 100 parts by weight of dimethylol-tricyclodecane diacrylate (product name: Light Acrylate DCP-A, produced by KYOEISYA CHEMICHAL Co., LTD.).

Subsequently, a thin film which had a thickness of 10μm and whose fine uneven structure had a height of 100nm and was provided at intervals of 300nm was formed on a surface of a resin cured product by a method similar to that described in Example 1.

[Comparative Example 2]

A UV curable resin composition was prepared by blending 3 parts by weight of 2-hydroxy-2-methyl-1-phenylpropan-1-one (product name: DAROCUR 1173, produced by Ciba Japan K.K.) with 100 parts by weight of polyethylene glycol diacrylate (product name: NK-Ester A-1000, produced by Shin-Nakamura Chemical Co., Ltd.).

Subsequently, a thin film which had a thickness of 10μm and whose fine uneven structure had a height of 100nm and was provided at intervals of 300nm was formed on a surface of a resin cured product by a method similar to that described in Example 1. Note that the polyethylene glycol diacrylate used in the present comparative example is a compound in which n = 23 in the general formula (1).

[Comparative Example 3]

A UV curable resin composition was prepared by mixing 5% by weight of diethylene glycol diacrylate (product name: SR-230, produced by Sartomer Company, Inc.) and 95% by weight of dipentaerythritol hexacrylate (product name: Light Acrylate DPE-6A, produced by KYOEISYA CHEMICHAL Co., LTD.) and then blending, with the mixture, 3 parts by weight of 2-hydroxy-2-methyl-1-phenylpropan-1-one (product name: DAROCUR 1173, produced by Ciba Japan K.K.) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1. Note that the diethylene glycol diacrylate used in the present comparative example is a compound in which n = 2 in the general formula (1).

[Comparative Example 4]

A UV curable resin composition was prepared by mixing 50% by weight of acrylic-modified silicone oil (product name: X-62-7192, produced by Shin-Etsu Chemical Co., Ltd.) and 50% by weight of pentaerythritol tetracrylate (product name: Light Acrylate PE-4A, produced by KYOEISYA CHEMICHAL Co., LTD.) and then blending, with the mixture, 5 parts by weight of 2-hydroxy-2-methyl-1-phenylpropan-1-one (product name: DAROCUR 1173, produced by Ciba Japan K.K.) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1.

[Comparative Example 5]

A UV curable resin composition was prepared by mixing 10% by weight of a urethane acrylate oligomer (product name: CN983, produced by Sartomer Company, Inc.) and 90% by weight of dipentaerythritol hexacrylate (product name: Light Acrylate DPE-6A, produced by KYOEISYA CHEMICHAL Co., LTD.) and then blending, with the mixture, 3 parts by weight of 2-hydroxy-2-methyl-1-phenylpropan-1-one (product name: DAROCUR 1173, produced by Ciba Japan K.K.) as a photopolymerization initiator.

Subsequently, a thin film which had a thickness of 10μm and whose fine uneven structure had a height of 100nm and was provided at intervals of 300nm was formed on a surface of a resin cured product by a method similar to that described in Example 1.

Note that no acrylic equivalents were found in Comparative Examples 4 and 5. This is because it is impossible to find a molecular weight since a raw resin structure is unclear.

[Pencil Hardness Test]

A pencil hardness of a surface of a fine uneven structure was measured in conformity with JIS K 5600-5-4. Note that the pencil hardness refers to a resistance of a coated film to a scar or other defects caused by pressing, against a surface of the coated film, a lead of a pencil whose size, shape, and hardness are specified and then moving the lead and the pencil hardness is stipulated in JIS K 5600-5-4. Note also that it is particularly preferable for a fine uneven

structure used for a display to have a pencil hardness of not less than 2H. A pencil hardness test is a test in which a flat plate whose surface is homogeneous is coated with a product to be tested or a coating product in a uniform thickness and then a pencil whose hardness is gradually increased is pressed against a level coated surface of the flat plate after the product to be tested or the coating product has been subjected to drying/reaction curing, thereby measuring a pencil hardness.

Table 1 shows a result of the pencil hardness test. Thin films obtained in Examples 1 through 8 showed respective hardnesses of not less than 2H. In contrast, thin films obtained in Comparative Examples 1 through 5 showed respective insufficient hardnesses of not more than 5B.

[Wear Resistance Test]

Each of surfaces of the thin films obtained in Examples and Comparative Examples was rubbed 10 times under a load of 100g/cm$^2$ by use of steel wool (produced by Nihon SteelWool Co., Ltd., model number: #0000) (rubbed by moving weighted steel wool back and forth). Then, how the surfaces were scarred was visually observed, so as to evaluate (i) a case in which a surface was not scarred at all, (ii) a case in which a surface was slightly scarred, (iii) a case in which a surface had noticeable fine scars, and (iv) a case in which a surface was terribly scarred as G (Good), F (Fair), P (Poor), and VP (Very Poor), respectively.

Table 1 shows a result of the wear resistance test. The thin films obtained in Examples 1 through 8 showed no scars even after being subjected to the wear resistance test. In contrast, the thin films, which were obtained in Comparative Examples 1 through 5 and evaluated as VP or P, were insufficiently resistant to wear.

[Pressure Resistance Test]

Each of the surfaces of the thin films obtained in Examples and Comparative Examples was subjected to a load of 30kg/cm$^2$ for 5 seconds by use of an air cylinder (produced by Nihon Kizai Co., Ltd.) and then what uneven structures of the surfaces were like was observed by a scanning electron microscope (an SEM) (magnification $\times$30,000), so as to evaluate (i) a case in which an uneven structure was perfectly retained, (ii) a case in which an uneven structure was slightly deformed, (iii) a case in which an uneven structure was noticeably deformed, and (iv) a case in which an uneven structure was terribly deformed as G (Good), F (Fair), P (Poor), and VP (Very Poor), respectively.

Table 1 shows a result of the pressure resistance test. The thin films obtained in Examples 1 through 8 perfectly retained their respective fine structures even after being subjected to the pressure resistance test. In contrast, the thin films obtained in Comparative Examples 1 through 5 had their respective deformed fine structures though there was a difference in degree of deformation.

[Table 1]

| | Acrylic Equivalent | Content of Repeating Unit (% by weight) | Pencil Hardness Test | Wear Resistance Test | Pressure Resistance Test |
|---|---|---|---|---|---|
| Example 1 | 150 | 58 | 3H | G | G |
| Example 2 | 494 | 85 | 3H | F | G |
| Example 3 | 99 | 3 | 4H | F | G |
| Example 4 | 105 | 35 | 4H | G | G |
| Example 5 | 120 | 27 | 5H | G | G |
| Example 6 | 248 | 68 | 4H | G | G |
| Example 7 | 108 | 10 | 5H | G | G |
| Example 8 | 236 | 11 | 3H | G | G |
| Comparative Example 1 | 151 | 0 | <6B | VP | F |
| Comparative Example 2 | 566 | 89 | <6B | VP | P |
| Comparative Example 3 | 97 | 0.8 | <6B | VP | F |

(continued)

| | Acrylic Equivalent | Content of Repeating Unit (% by weight) | Pencil Hardness Test | Wear Resistance Test | Pressure Resistance Test |
|---|---|---|---|---|---|
| Comparative Example 4 | - | 0 | 5B | P | P |
| Comparative Example 5 | - | 0 | <6B | VP | F |

According to the results of Examples and Comparative Examples, it was proved that use of a resin composition of the present invention for producing an optical component allows an optical component to have hardness and flexibility in a balanced manner.

Industrial Applicability

Since a resin composition of the present invention for producing an optical component is arranged to contain at least one kind of compound whose molecule contains the repeating unit represented by the general formula (1) and at least one (meth)acryloyl group and to meet the requirements (a) and (b), the resin composition of the present invention is useful as a raw material for a resin cured product which becomes highly resistant to wear, abrasion, and pressure when cured and has hardness and flexibility in a balanced manner. Accordingly, it is possible to extensively use the resin composition of the present invention for an antireflection coating, an antireflection film, a relief hologram, a lens, an optical waveguide, an optical disk, a polarization split element, and the like.

## Claims

1. A method for producing an optical component, said method comprising the steps of:

   (A) selecting a resin composition containing at least one kind of compound whose molecule contains a repeating unit represented by the general formula (1) and at least one (meth)acryloyl group,

   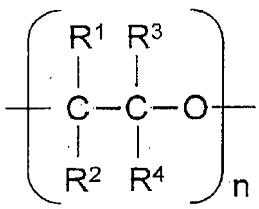 · · · (1)

   wherein each of $R^1$ through $R^4$ independently represents a hydrogen atom or an alkyl group, and n represents an integer of not less than 1; and
   (B) forming a fine uneven structure in the resin composition, which has been selected in the step (A), so that intervals at which the fine uneven structure is provided are not more than half a wavelength of visible light or near infrared light, and curing the resin composition in which the fine uneven structure has been formed,
   said method being carried out with use of

   (I) a curve prepared by (i) obtaining, based on the equation (2) and the equation (3) below, an acrylic equivalent and a content of the repeating unit in a compound whose molecule contains the repeating unit and two acryloyl groups and in which n represents an integer of not less than 2 and (ii) plotting the acrylic equivalent as a vertical axis and the content of the repeating unit as a horizontal axis,

$$\text{acrylic equivalent} = [\{40 + Mw(R^1) + Mw(R^2) + Mw(R^3) + Mw(R^4)\} \times n + 126] / 2 \quad \ldots(2)$$

$$\text{content of repeating unit} = [\{40 + Mw\,(R^1) + Mw\,(R^2) + Mw\,(R^3) + Mw\,(R^4)\} \times n] \times 100 / [\{40 + Mw\,(R^1) + Mw\,(R^2) + Mw\,(R^3) + Mw\,(R^4)\} \times n + 126] \ldots (3)$$

where Mw ($R^1$) through Mw ($R^4$) represent molecular weights of $R^1$ through $R^4$, respectively, and
(II) a straight line prepared by connecting a point on the curve that indicates the acrylic equivalent and the content of the repeating unit in diethylene glycol diacrylate with a point obtained with the vertical axis and the horizontal axis respectively representing an acrylic equivalent and a content of the repeating unit of pentaerythritol tetracrylate,
the resin composition selected in the step (A) having a (meth)acrylic equivalent of not less than 90, not less than a value indicated by any of points on the curve and the straight line, and not more than 500 and a content of the repeating unit of not less than 1% by weight and not more than 88% by weight, and the (meth)acrylic equivalent of the resin composition selected in the step (A) being calculated based on the equation (4) or the equation (5) below:

(meth)acrylic equivalent = molecular weight of a compound which is contained in the resin composition and whose molecule contains the repeating unit represented by the general formula (1) and at least one (meth)acryloyl group / the number of (meth)acryloyl groups per molecule of the compound ... (4)

(meth)acrylic equivalent in a case where the resin composition is a mixture of two or more kinds of compounds a, b, c, ... = ((meth)acrylic equivalent of compound a × ratio of compound a + (meth)acrylic equivalent of compound b × ratio of compound b + (meth)acrylic equivalent of compound c × ratio of compound c + ...) ... (5)

where, for example, the "ratio of compound a" refers to a ratio (% by weight) of a weight of the compound a whose molecule contains the repeating unit represented by the general formula (1) and at least one (meth)acryloyl group with respect to a weight of the resin composition (a sum of weights of compounds a, b, c, ...).

**2.** The method as set forth in claim 1, wherein:

the step (A) is the step of selecting a resin composition which contains (i) at least one kind of compound whose molecule contains the repeating unit represented by the general formula (1) and at least one (meth)acryloyl group and (ii) a (meth)acrylate compound whose molecule does not contain the repeating unit, the resin composition having a (meth)acrylic equivalent of not less than 90, not less than a value indicated by any of the points on the curve and the straight line, and not more than 500 and a content of the repeating unit represented by the general formula (1) of not less than 1% by weight and not more than 88% by weight.

**3.** The method as set forth in claim 1, wherein:

the step (A) is the step of selecting a resin composition which contains at least one kind of compound whose molecule contains the repeating unit represented by the general formula (1) and at least one (meth)acryloyl group, the resin composition having a (meth)acrylic equivalent of not less than 100, not less than a value indicated by any of the points on the curve and the straight line, and not more than 250 and a content of the repeating unit represented by the general formula (1) of not less than 10% by weight and not more than 75% by weight.

**4.** The method as set forth in any one of claims 1 through 3, wherein the repeating unit is an ethylene oxide group or a propylene oxide group.

**5.** The method as set forth in any one of claims 1 through 4, wherein the optical component is an antireflection coating or an antireflection film.

**6.** The method as set forth in any one of claims 1 through 5, further comprising the steps of:

(C) preparing the curve; and
(D) preparing the straight line.

**Patentansprüche**

**1.** Verfahren für die Herstellung einer optischen Komponente, wobei das Verfahren die Schritte umfasst:

(A) Auswählen einer Harzzusammensetzung, die mindestens eine Art Verbindung enthält, deren Molekül eine Wiederholungseinheit, die durch die allgemeine Formel (1) dargestellt ist, und mindestens eine (Meth)acryloylgruppe enthält,

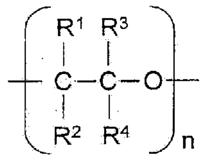 · · · (1)

wobei jedes von $R^1$ bis $R^4$ unabhängig ein Wasserstoffatom oder eine Alkylgruppe darstellt und n eine ganze Zahl von nicht weniger als 1 darstellt; und
(B) Bilden einer feinen unebenen Struktur in der Harzzusammensetzung, die in Schritt (A) ausgewählt worden ist, so dass Abstände, in denen die feine unebene Struktur bereitgestellt wird, nicht mehr als eine halbe Wellenlänge von sichtbarem Licht oder Nahinfrarotlicht betragen, und Aushärten der Harzzusammensetzung, in der die feine unebene Struktur gebildet worden ist, wobei das Verfahren unter Verwendung durchgeführt wird von (I) einer Kurve, die durch (i) Erhalten, auf der Basis der Gleichung (2) und der Gleichung (3) unten, eines Acryläquivalents und eines Gehalts der Wiederholungseinheit in einer Verbindung, deren Molekül die Wiederholungseinheit und zwei Acryloylgruppen enthält und wobei n eine ganze Zahl von nicht weniger als 2 darstellt, und (ii) Aufzeichnen des Acryläquivalents als senkrechte Achse und des Gehalts der Wiederholungseinheiten als horizontale Achse erstellt wird,

$$\text{Acryläquivalent} = [\{40 + Mw (R^1) + Mw (R^2) + Mw (R^3) + Mw (R^4)\} \times n + 126]/2 \quad ...(2)$$

$$\text{Gehalt an Wiederholungseinheit} = [\{40 + Mw (R^1) + Mw (R^2) + Mw (R^3) + Mw (R^4) \times n] \times 100/= [\{40 + Mw (R^1) + Mw (R^2) + Mw (R^2) + Mw (R^3) + Mw (R^4)\} \times n + 126]...(3)$$

wobei Mw ($R^1$) bis Mw ($R^4$) jeweils Molekulargewichte von $R^1$ bis $R^4$ darstellen und (II) einer geraden Linie, die durch Verbinden eines Punktes auf der Kurve, die das Acryläquivalent und den Gehalt der Wiederholungseinheit in Diethylenglycoldiacrylat angezeigt, mit einem Punkt, der erhalten wird, wenn die senkrechte Achse und die horizontale Achse jeweils ein Acryläquivalent und einen Gehalt der Wiederholungseinheit von Pentaerythrittetraacrylat darstellen,
wobei die in Schritt (A) ausgewählte Harzzusammensetzung ein (Meth)acryläquivalent von nicht weniger als 90, nicht weniger als einen Wert, der durch irgendwelche Punkte auf der Kurve und der geraden Linie angezeigt wird, und nicht mehr als 500 und einen Gehalt der Wiederholungseinheit von nicht weniger als 1 Gew.-% und nicht mehr als 88 Gew.-% aufweist und
das (Meth)acryläquivalent der Harzzusammensetzung, die in Schritt (A) ausgewählt wird, auf der Basis der Gleichung (4) oder der Gleichung (5) unten berechnet wird:

(Meth)acryläquivalent = Molekulargewicht einer Verbindung, die in der Harzzusammensetzung enthalten ist, und deren Molekül die Wiederholungseinheit, die durch die allgemeine Formel (1) dargestellt ist und mindestens eine (Meth)acryloylgruppe / die Anzahl von (Meth)acryloylgruppen pro Molekül der Verbindung...(4) enthält,

(Meth)acryläquivalent in einem Fall, wo die Harzzusammensetzung eine Mischung von zwei oder mehr Arten von Verbindungen a, b, c ... = ((Meth)acryläquivalent der Verbindung a x Verhältnis der Verbindung a + (Meth)acryläquivalent der Verbindung b x Verhältnis der Verbindung b + (Meth)acryläquivalent der Verbindung c x Verhältnis der Verbindung c + ...) ... (5)

wobei beispielsweise das "Verhältnis einer Verbindung a" sich auf ein Verhältnis (Gew.-%) eines Gewichts der Verbindung a, deren Molekül die Wiederholungseinheit, die durch die allgemeine Formel (1) dargestellt ist und mindestens eine (Meth)acryloylgruppe enthält, mit Bezug auf ein Gewicht der Harzzusammensetzung (einer Summe von Gewichten der Verbindungen a, b, c ...) bezieht.

**2.** Verfahren wie in Anspruch 1 aufgeführt, wobei:

der Schritt (A) der Schritt des Auswählens einer Harzzusammensetzung ist, die (i) mindestens eine Art Verbindung, deren Molekül die Wiederholungseinheit, die durch die allgemeine Formel (1) dargestellt ist, und mindestens eine (Meth)acryloylgruppe enthält und (ii) eine (Meth)acrylatverbindung enthält, deren Molekül die Wiederholungseinheit nicht enthält, wobei die Harzzusammensetzung ein (Meth)acryläquivalent von nicht weniger als 90, nicht weniger als einen Wert, der durch irgendeinen der Punkte auf der Kurve und der geraden Linie angezeigt ist, und nicht mehr als 500 und einen Gehalt der Wiederholungseinheit, die durch die allgemeine Formel (1) dargestellt ist, von nicht weniger als 1 Gew.-% und nicht mehr als 88 Gew.-% aufweist.

**3.** Verfahren wie in Anspruch 1 aufgeführt, wobei:

der Schritt (A) der Schritt des Auswählens einer Harzzusammensetzung ist, die mindestens eine Art Verbindung, deren Molekül die Wiederholungseinheit enthält, die durch die allgemeine Formel (1) dargestellt ist, und mindestens eine (Meth)acryloylgruppe enthält, wobei die Harzzusammensetzung ein (Meth)acryläquivalent von nicht weniger als 100, nicht weniger als einen Wert, der durch irgendeinen der Punkte auf der Kurve und der geraden Linie angezeigt ist, und nicht mehr als 250 und einen Gehalt der Wiederholungseinheit, die durch die allgemeine Formel (1) dargestellt ist, von nicht weniger als 10 Gew.-% und nicht mehr als 75 Gew.-% aufweist.

4. Verfahren wie in einem der Ansprüche 1 bis 3 aufgeführt, wobei die Wiederholungseinheit eine Ethylenoxidgruppe oder eine Propylenoxidgruppe ist.

5. Verfahren wie in einem der Ansprüche 1 bis 4 aufgeführt, wobei die optische Komponente eine Antireflexbeschichtung oder ein Antireflexfilm ist.

6. Verfahren wie in einem der Ansprüche 1 bis 5 aufgeführt, ferner die Schritte umfassend des

(C) Erstellens der Kurve; und
(D) Erstellens der geraden Linie.

## Revendications

1. Procédé de production d'un composant optique, ledit procédé comprenant les étapes de :

(A) sélection d'une composition de résine contenant au moins un type de composé dont la molécule contient un motif récurrent représenté par la formule générale (1) et au moins un groupe méthacryloyle,

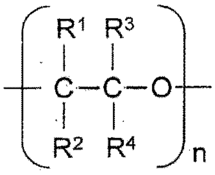 · · · (1)

dans laquelle chacun des $R^1$ à $R^4$ représente indépendamment un atome d'hydrogène ou un groupe alkyle, et n représente un nombre entier n'etant pas inférieur à 1 ; et
(B) formation d'une structure irrégulière fine dans la composition de résine, qui a été sélectionnée lors de l'étape (A), de sorte que des intervalles auxquels la structure irrégulière fine est fournie ne sont pas plus de la moitié d'une longueur d'onde de lumière visible ou de lumière infrarouge proche, et durcir la composition de résine dans laquelle la structure irrégulière fine a été formée,
ledit procédé étant effectué avec une utilisation de

(I) une courbe préparée par (i) l'obtention, sur la base de l'équation (2) et de l'équation (3) ci-dessous, d'un équivalent acrylique et une teneur en motif récurrent dans un composé dont la molécule contient le motif récurrent et deux groupes acryloyle et dans laquelle n représente un nombre entier n'étant pas inférieur à 2 et (ii) le traçage de l'équivalent acrylique en tant qu'axe vertical et la teneur du motif récurrent en tant qu'axe horizontal,

$$\text{équivalent acrylique} = [\{40 + Mw(R^1) + Mw(R^2) + Mw(R^3) + Mw(R^4)\} \times n + 126] / 2 \quad \ldots(2)$$

$$\text{teneur en motif récurrent} = [\{40 + Mw(R^1) + Mw(R^2) + Mw(R^3) + Mw(R^4)\} \times n] \times 100 / [\{40 + Mw(R^1) + Mw(R^2) + Mw(R^3) + Mw(R^4)\} \times n + 126] \quad \ldots(3)$$

Mw ($R^1$) jusqu' à Mw ($R^4$) représentant les poids moléculaires de $R^1$ jusqu'à $R^4$, respectivement, et

(II) une ligne droite préparée en connectant un point de la courbe qui indique l'équivalent acrylique et la teneur en motif récurrent dans le diacrylate de diéthylène glycol avec un point obtenu avec l'axe vertical et l'axe horizontal représentant respectivement un équivalent acrylique et une teneur en motif récurrent de tétracrylate de pentaérythritol,
la composition de résine choisie dans l'étape (A) possédant un équivalent méthacrylique d'au moins 90, au moins une valeur indiquée par n'importe lequel des points sur la courbe et la ligne droite, et pas plus de 500 et une teneur en motif récurrent d'au moins 1% en poids et pas plus de 88% en poids, et
l'équivalent méthacrylique de la composition de résine choisie dans l'étape (A) étant calculé sur la base de l'équation (4) ou de l'équation (5) ci-dessous :

équivalent méthacrylique = poids moléculaire d'un composé qui est contenu dans la composition de résine et dont la molécule contient le motif récurrent représenté par la formule générale (I) et au moins un groupe méthacryloyle / le nombre de groupes méthacryloyle par molécule du composé …(4)

équivalent méthacrylique dans un cas où la composition de résine est un mélange de deux ou plusieurs types de composés a, b, c, … = (équivalent méthacrylique du composé a × ratio du composé a + équivalent méthacrylique du composé b × ratio du composé b + équivalent méthacrylique du composé c × ratio du composé c + …) …(5)

où, par exemple, le « ratio du composé a » fait référence à un ratio (% en poids) d'un poids du composé a dont la molécule contient le motif récurrent représenté par la formule générale (I) et au moins un groupe méthacryloyle par rapport à un poids de la composition de résine (une somme de poids des composés a, b, c, ...).

**2.** Procédé selon la revendication 1, dans lequel :

l'étape (A) est l'étape de sélection d'une composition de résine qui contient (i) au moins un type de composé dont la molécule contient le motif récurrent représenté par la formule générale (1) et au moins un groupe méthacryloyle et (ii) un composé méthacrylate dont la molécule ne contient pas le motif récurrent, la composition de résine possédant un équivalent méthacrylique d'au moins 90, au moins une valeur indiquée par n'importe lequel des points sur la courbe et la ligne droite, et pas plus de 500 et une teneur en motif récurrent représenté par la formule générale (1) d'au moins 1% en poids et pas plus de 88% en poids.

**3.** Procédé selon la revendication 1, dans lequel :

l'étape (A) est l'étape de sélection d'une composition de résine qui contient au moins un type de composé dont la molécule contient le motif récurrent représenté par la formule générale (1) et au moins un groupe méthacryloyle, la composition de résine possédant un équivalent méthacrylique d'au moins 100, au moins une valeur indiquée par n'importe lequel des points sur la courbe et la ligne droite, et pas plus de 250 et une teneur en motif récurrent représenté par la formule générale (1) d'au moins 10% en poids et pas plus de 75% en poids.

**4.** Procédé selon l'une quelconque des revendications 1 à 3, dans lequel le motif récurrent est un groupe oxyde d'éthylène ou un groupe oxyde de propylène.

5. Procédé selon l'une quelconque des revendications 1 à 4, dans lequel le composant optique est un revêtement antireflet ou un film antireflet.

6. Procédé selon l'une quelconque des revendications 1 à 5, comprenant en outre les étapes de :

   (C) préparation de la courbe ; et
   (D) préparation de la ligne droite.

FIG. 1

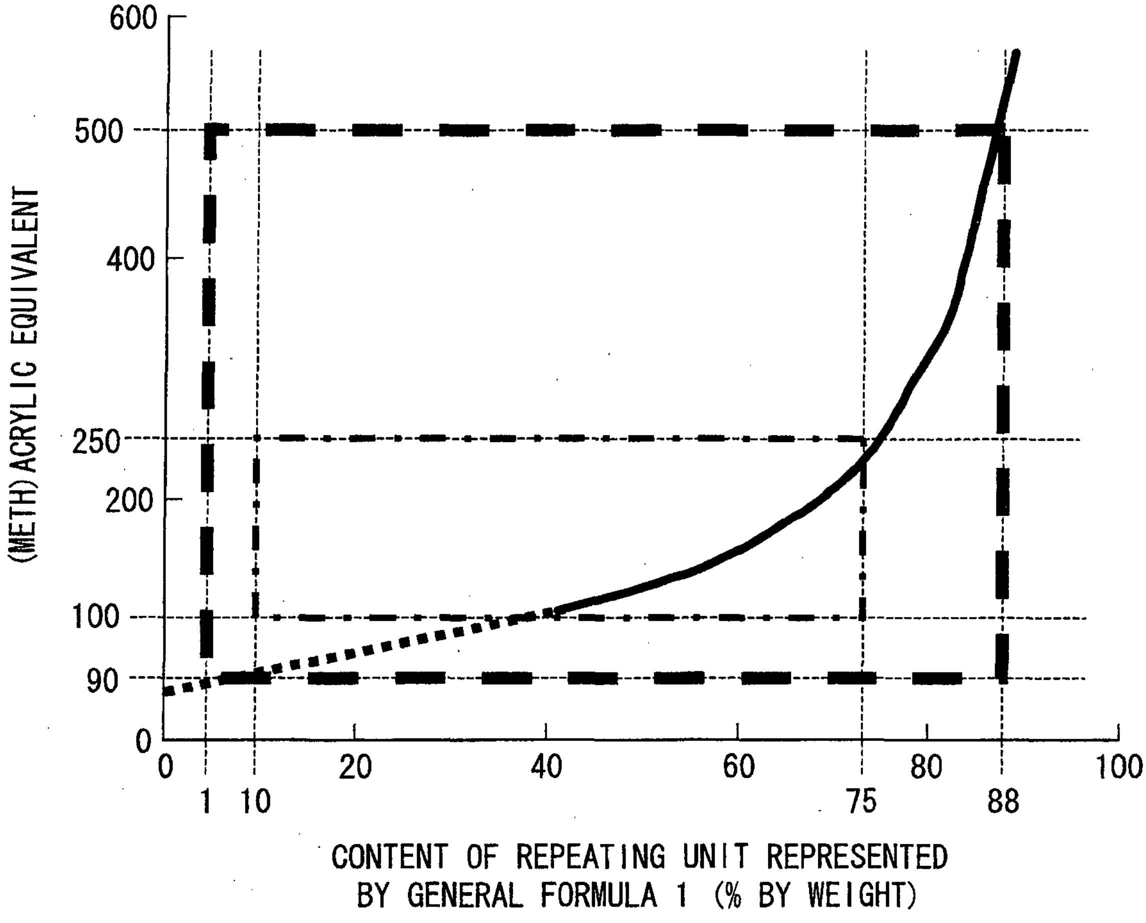
600
500
400
250
200
100
90
0
(METH)ACRYLIC EQUIVALENT
0
1
10
20
40
60
75
80
88
100
CONTENT OF REPEATING UNIT REPRESENTED
BY GENERAL FORMULA 1 (% BY WEIGHT)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005331607 A
- JP 2003292828 A